# EUROPÄISCHE PATENTSCHRIFT

(11) **EP 2 337 646 B1**
(45) Veröffentlichungstag und Bekanntmachung des Hinweises auf die Patenterteilung: **27.03.2013**
(21) Anmeldenummer: 09793448.3
(22) Anmeldetag: 17.10.2009
(51) Int. Cl.: B23D 43/02, B23F 21/26

(54) **INNENRÄUMWERKZEUG**
INTERNAL BROACHING TOOL
OUTIL DE BROCHAGE INTÉRIEUR

(30) Priorität: 24.10.2008 DE 102008053155
(43) Veröffentlichungstag der Anmeldung: 29.06.2011
(73) Patentinhaber: Spezialwerkzeuge GmbH Zella-Mehlis, 98544 Zella-Mehlis / Thüringen (DE)
(72) Erfinder: KÜHNER, Jürgen, 98544 Zella-Mehlis (DE); DUCKE, Matthias, 36039 Fulda/Bernhards (DE)
(86) Internationale Anmeldenummer: PCT/DE2009/001454
(87) Internationale Veröffentlichungsnummer: WO 2010/045926

(56) Entgegenhaltungen:
- EP-A1- 1 184 118
- US-A- 2 161 901
- US-A- 3 178 800
- US-A- 4 111 586

## Beschreibung

Die Erfindung betrifft ein Innenräumwerkzeug zum Innenräumen von Innenverzahnungen.

Aus der DIN 1415 (Ausgabe 1973), Blatt 1, Seite 2 sind Innenräumwerkzeuge zum Innenräumen von Profilen bekannt.

Diese Innenräumwerkzeuge weisen einen Schaft, einen Zahnungsteil und ein Endstück auf. Zum Innenräumen wird der Schaft des Innenräumwerkzeuges im Schafthalter einer Räummaschine eingespannt. Die zu erzeugenden Profile werden geräumt indem das wie beschrieben eingespannte Räumwerkzeug durch ein ebenfalls in der Räummaschine angeordnetes Werkstück hindurchgezogen wird.

Nach Beendigung des Räumvorganges und der Entnahme des geräumten Werkstückes wird das Endstück des Räumwerkzeuges von einem Endstückhalter der Räummaschine erfasst und wieder in seine Ausgangsposition zurück transportiert.

Der Zahnungsteil des Räumwerkzeuges weist entgegen der Räumrichtung hintereinander in mehreren Reihen angeordnete Räumzähne auf.

Diese Räumzähne sind zum Schneiden des Profilgrundes einerseits mit Profilgrundschneiden und zum Schneiden der Profilflanken andererseits zudem mit Profilflankenschneiden ausgestattet.

Die Profilgrundschneiden werden, da sie die Hauptschneidleistung erbringen auch als Hauptschneiden und die Profilflankenschneiden als Nebenschneiden bezeichnet.

Die Profilgrundschneiden der einander zugeordneten Räumzähne sind hintereinander angeordnet und weisen entgegen der Räumrichtung eine Tiefenstaffelung, d.h. eine Durchmessersteigerung auf.

Dies bewirkt, dass alle zum Schneiden eines Profils dienenden Räumzähne nacheinander jeweils einen Span am Profilgrund schneiden.

Die zum Schneiden der Flanken des Profils dienenden Profilflankenschneiden weisen entgegen der Räumrichtung ein Profilgefälle auf, wobei die Profilflankenschneiden des nachfolgenden Räumzahns bezogen auf die Profilflankenschneiden des voreilenden Räumzahnes seitlich frei liegen, d.h. "schmaler" ausgebildet sind, so dass der nachfolgende Räumzahn mit seinen Profilflankenschneiden stets nur in dem durch die Tiefenstaffelung (Durchmessersteigerung) vorgesehenen Bereich schneidet. Dadurch kann ein Verklemmen der Räumzähne im Bereich der Profilflanken während des Räumvorganges verhindert werden.

Infolge der hohen Belastungen des Räumwerkzeuges kann es während des Räumvorganges zu einer Verlagerung der Achse des Werkzeuges kommen, wodurch die nacheinander abtragenden Räumzähne gegenüber dem zu räumenden Werkstück eine unterschiedliche Mittenlage aufweisen.

Dieser Mittenabweichung kann nun beim Drallräumen, infolge der beim Drallräumen auftretenden zusätzlichen hohen rotatorischen Kräfte ein Torsionsfehler überlagert werden, wodurch sowohl die Profilgenauigkeit wie auch die Oberflächengüte der Profilflanken beeinträchtigt wird.

Da jedoch bei innenverzahnten Zahnrädern mit einer Schrägverzahnung zur Gewährleistung eines verschleißfreien, exakten und ruhigen Laufes eine hohe Profilform und Flankengenauigkeit gefordert wird, ist es im Stand der Technik üblich dem bereits beschriebenen, mit Räumzähnen ausgestatteten Zahnungsteil entgegen der Räumrichtung noch einen Kalibrierbereich nachzuordnen.

Dieser Kalibrierbereich am Räumwerkzeug besteht aus mehreren hintereinander angeordneten Räumzähnen gleicher Höhe, welche entgegen der Räumrichtung größer werdende Zahndicken aufweisen.

Diese Kalibrierräumzähne schneiden jeweils über die gesamte Höhe der Profilflanke einen Span, dessen Spandicke im allgemeinen 10 bis 20 µm beträgt. Diese Kalibrierräumzähne sind an ihren Profilflankenschneiden mit einem Freiwinkel versehen.

Mittels dem Kalibrierräumen wird eine gute Profilformgenauigkeit und eine hohe Oberflächengüte erreicht.

Mittels der im Stand der Technik eingesetzten Innenräumwerkzeuge mit Kalibrierteil tritt beim Wechsel vom tiefengestaffelten Räumen zum Vollformkalibrieren systembedingt eine Räumkraftunterbrechung auf, die insbesondere beim Drallräumen zu einer Entlastung der entgegen der Räumrichtung wirkenden Hauptschnittkraft und damit zu einer Reduktion der Torsionsspannung führt, wodurch sich die relative Verdrehung zwischen dem Werkstück und dem Räumwerkzeug verändert. Diese Rückfederung kann nun bewirken, dass der Vollform-Kalibrierbereich nicht richtig in die unter Tiefenstaffelung bereits geräumten Profile eingeführt wird, so dass bei fehlerhafter "Einführung" der Kalibrierzähne, welche scharfe Schneiden besitzen, dann die Profilflanken einseitig angeschnitten werden, so dass das Profil dann nicht wie eigentlich beabsichtigt an beiden Profilflanken kalibriert wird.

Diese teilweise "Rückfederung" muss nun bereits bei der Konstruktion des Räumwerkzeuges, d.h. der Anordnung der Räumzähne des Kalibrierbereiches Berücksichtigung finden.

Eine fehlerhaft "versetzte" Anordnung der Kalibrierräumzähne gegenüber den tiefengestaffelten Räumzähnen hat zur Folge, dass das gesamte Räumwerkzeug unbrauchbar ist.

Daher wurde mittels einer in der EP 0739674 A1 vorbeschriebenen Lösung versucht die vorgenannten Nachteile bei Innenräumwerkzeugen dadurch zu beseitigen, dass die hintereinander angeordneten und einander zugeordneten Räumzähne über ihre volle Profilhöhe Profilflankenschneiden besitzen die eine Profilsteigung aufweisen, welche klein gegenüber der Durchmessersteigung der Profilgrundschneiden ist, so dass bei dieser Lösung die Räumzähne "dicker" werden.

Bei dieser Lösung wird versucht die Schnittkraft derart zu beeinflussen, dass während des gesamten Räumvorganges eine konstante Torsionskraft beibehalten wird. Erst nach Beendigung des gesamten Räumvorganges erfolgt dann eine Entspannung und eine "Rückfederung" der Torsionsverdrehung.

Um mittels dieser Lösung das gewünschte Räumergebnis zu erzielen sind umfangreiche Versuche erforderlich. Dennoch wird jede Variation der Werkstückmaterial-Festigkeitskennwerte das Räumergebnis beeinflussen und kann dann auch zu unerwünschten Profilfehlern führen.

Nachteilig bei dieser Lösung ist zudem die aufwendige und sehr schwierige Herstellung, da die Profilsteigungen von 1 bis 3 µm pro Zahn nur in Summe in der Maschine (beispielsweise über 20 Zähne) gemessen werden können. Auch hat man bei dieser in der EP 0739674 A1 vorgestellten Lösung keine Möglichkeit das einmal gefertigten Räumwerkzeug zu "korrigieren", d.h. z.B. dann wenn die seitens des Kunden geforderten Parameter der Verzahnung mittels des eingesetzten Räumwerkzeuges nicht erfüllt werden können beispielsweise das vg. Räumwerkzeug dann noch derart zu verändern, dass mit möglichst geringen Kostenaufwand dem Kundenwunsch entsprochen werden kann. Daher muss in einem solchen Fall bei dieser in der EP 0739674 A1 vorgestellten Lösung stets ein neues Innenräumwerkzeug zeitaufwendig und kostenintensiv angefertigt werden.

Die in der EP 0739674 A1 vorbeschriebene Lösung wurde später mittels der in der EP 1 160 040 A1 offenbarten Lösung optimiert, wobei jedoch auch die neue, die optimierte Lösung ebenfalls die bereits in Verbindung mit der EP 0739674 A1 erläuterten Nachteile aufweist.

In der EP 1 317 982 B1 wird eine weitere Lösung offenbart, die wiederum die in der EP 0739674 A1 vorbeschriebene Lösung weiterentwickelt und die sowohl auf Zieh-Räummaschinen als auch auf immer mehr zur Anwendung kommenden Hebetisch-Räummaschinen eingesetzt werden kann, wobei bei dieser Lösung das Räumwerkzeug mit Führungsflanken versehen ist die in einer Richtung stets gegen die bereits die endgültige Form aufweisenden Profilflanken gedrückt werden, wobei diese nach der Beendigung des tiefengestaffelten Räumvorganges bereits die gewünschte endgültige Qualität aufweisen, so dass bei dieser Lösung dann stets die gegenüberliegende Profilflanke nachkalibriert wird.

Hieraus resultiert jedoch neben den analog zur Lösung nach der EP 0739674 A1 auftretenden Nachteilen ein weiterer Nachteil, der darin besteht, dass mittels der in der EP 1 317 982 B1 vorgestellten Lösung keinerlei (beispielsweise kundenseitig gewünschte) die Laufruhe der Getriebe o.ä. beeinflussende beidseitige Flankenformkorrekturen vorgenommen werden können.

Aus der EP 1 184 118 B1 ist zudem ein Räumwerkzeug mit einer Vielzahl von Schneidenabschnitten mit in Achsrichtung maximal sechs Zähnen bekannt welche eine axiale Verlagerung, d.h. ein "Verlaufen" des Räumwerkzeuges bei der Herstellung von geraden Profilen vermeiden soll, wobei die einzelnen Schneidenabschnitte voneinander durch Rückzentrierführungen getrennt sind. Die Herstellung dieser Rückzentrierführungen ist jedoch sehr aufwendig und kostenintensiv.

Weiterhin ist aus der US 4,111,586 ein Innenräumwerkzeug bekannt, welches aus mehreren hülsenförmigen Bauteilen zusammengesetzt ist. Der Kalibrierbereich wird bei dieser Lösung über Anlageflächen an einer Stirnseite fixiert.

Das Werkzeug besitzt im Eingangs- und Endbereich Befestigungshülsen, die über radiale Schrauben die einzelnen hülsenförmigen Bauteile miteinander auf einem mittig der Hülsen angeordneten Grundträger fixieren.

Diese Lösung ist zum Drallräumen nicht geeignet und ein Korrigieren von aus Mittenabweichungen und/oder Torsionsbeanspruchungen resultierenden Räumfehlern ist generell nicht möglich.

Dokument US 3178800 offenbart ein Innenräumwerkzeug zum Innenräumen von Innenverzahnungen mit Profilgrund und Profilflanken bestehend aus einem Räumwerkzeuggrundkörper mit einem Schaft, einem dem Schaft entgegen der Räumrichtung benachbart angeordneten Zahnungsteil und einem Endstück, wobei am Räumwerkzeuggrundkörper ein Buchsenaufnahmebereich mit einem dem Entspannungsteil benachbart angeordneten Buchsenanlagesteg, einem Buchsenmitnahmebereich, einem entgegen der Räumrichtung diesem benachbart angeordneten Buchsenführungsbereich und einem zwischen dem Buchsenführungsbereich und dem Endstück befindlichen Buchsenbefestigungsbereich angeordnet ist, wobei auf dem Buchsenaufnahmebereich eine mit Kalibrierräumzähnen versehene Kalibrierbuchse angeordnet ist mit einer dem Entspannungsteil benachbart angeordneten, mit dem Buchsenmitnahmebereich (8) in Wirkverbindung tretende Mitnehmeraufnahme.

Der Erfindung liegt die Aufgabe zugrunde ein Innenräumwerkzeug zum Räumen von Profilen zu entwickeln, welches auch zum Drallräumen geeignet ist, die vorgenannten Nachteile des Standes der Technik beseitigt und dabei ein kostengünstiges, robustes, maschinentechnisch einfaches, funktionssicheres und zuverlässiges Korrigieren von aus Mittenabweichungen und/oder Torsionsbeanspruchungen resultierenden Räumfehlern ohne Nachbearbeitung des Räumwerkzeuges ermöglicht und eine vorhersehbare, dem jeweiligen Kundenwunsch entsprechende, hohe Profilform- und Flankengenauigkeit am geräumten Werkstück gewährleistet.

Erfindungsgemäß wird diese Aufgabe durch ein Innenräumwerkzeug nach den Merkmalen des Hauptanspruches der Erfindung gelöst.

Vorteilhafte Ausführungen, Einzelheiten und Merkmale der Erfindung ergeben sich aus den Unteransprüchen sowie der nachfolgenden Beschreibung von zwei erfindungsgemäßen Ausführungsbeispielen in Verbindung mit den zugehörigen Zeichnungen zur erfindungsgemäßen Lösung.

Es zeigen dabei:
- Figur 1 :: das erfindungsgemäße Innenräumwerkzeug in einer von zwei möglichen Ausführungsformen mit "radial verdrehbarer" Kalibrierbuchse;
- Figur 2 :: die Einzelheit "Z" des erfindungsgemäßen Innenräumwerkzeuges aus Figur 1 mit "radial verdrehbarer" Kalibrierbuchse in einem Teilschnitt;
- Figur 3 :: die erfindungsgemäße, in den Figuren 1 und 2 bereits dargestellte "radial verdrehbare" Kalibrierbuchse als Einzelteil in der Seitenansicht im Teilschnitt;
- Figur 4 :: die erfindungsgemäße, in der Figur 3 dargestellte "radial verdrehbare" Kalibrierbuchse als Einzelteil in der Vorderansicht im Teilschnitt;
- Figur 5:: die erfindungsgemäße Kalibrierbuchse in einer zweiten mögliche Ausführungsform der erfindungsgemäßen Lösung als "axial verschiebbare" Kalibrierbuchse als Einzelteil in der Seitenansicht im Teilschnitt;
- Figur 6:: die erfindungsgemäße, in der Figur 5 dargestellte "axial verschiebbare" Kalibrierbuchse als Einzelteil in der Vorderansicht.

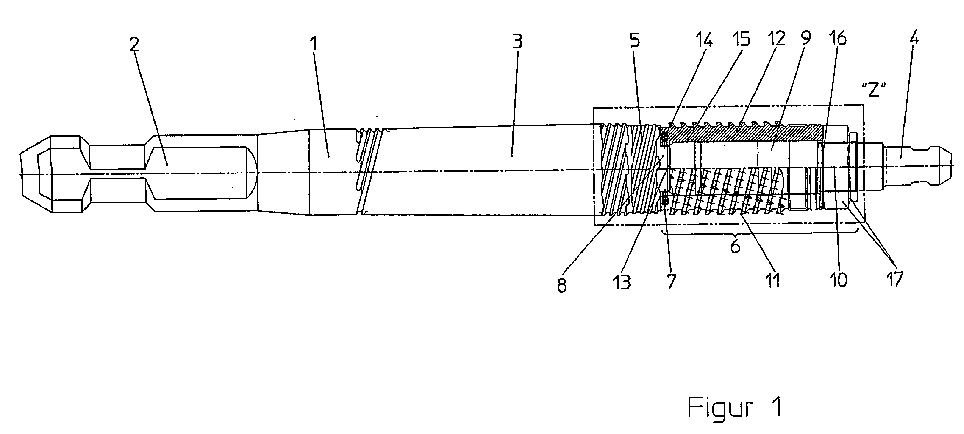

Das erfindungsgemäße Innenräumwerkzeug zum Innenräumen von Innenverzahnungen mit Profilgrund und Profilflanken, bestehend aus einem Räumwerkzeuggrundkörper 1 mit einem Schaft 2 einem dem Schaft 2 entgegen der Räumrichtung benachbart angeordneten Zahnungsteil 3 und einem Endstück 4, zeichnet sich erfindungsgemäß, wie in der Figur 1 dargestellt, dadurch aus, dass am Räumwerkzeuggrundkörper 1, zwischen dem Zahnungsteil 3 und dem Endstück 4 ein dem Zahnungsteil 3 entgegen der Räumrichtung nachfolgend benachbart angeordnetes Entspannungsteil 5, und diesem benachbart ein Buchsenaufnahmebereich 6 mit einem dem Entspannungsteil 5 benachbart angeordneten Buchsenanlagesteg 7, einem Buchsenmitnahmebereich 8, einem entgegen der Räumrichtung diesem benachbart angeordneten Buchsenführungsbereich 9 und einem zwischen dem Buchsenführungsbereich 9 und dem Endstück 4 befindlichen Buchsenbefestigungsbereich 10 angeordnet ist, wobei auf dem Buchsenaufnahmebereich 6 eine mit Kalibrierräumzähnen 11 versehene Kalibrierbuchse 12 mit einer dem Entspannungsteil 5 benachbart angeordneten, mit dem Buchsenmitnahmebereich 8 in Wirkverbindung tretende Mitnehmeraufnahme 13 sowie mehreren im Bereich der Mitnehmeraufnahme 13 in der Kalibrierbuchse 12 verstellbar angeordneten Stellelementen 14 und einer in der Kalibrierbuchse 12 axial angeordneten, mit dem Buchsenführungsbereich 9 in Wirkverbindung tretenden Führungsbohrung 15, einem an der Kalibrierbuchse 12 endseitig angeordneten, der Mitnehmeraufnahme 13 gegenüberliegend angeordneten Anlagebund 16 sowie einem diesem Anlagebund 16 der Kalibrierbuchse 12 benachbart angeordneten, mit dem Buchsenbefestigungsbereich 10 des Räumwerkzeuggrundkörpers 1 in Wirkverbindung tretenden Lagesicherungselement 17.

Diese erfindungsgemäße Anordnung bewirkt durch die Anordnung des Entspannungsteiles 5 ein Entspannen des Werkstückes vor der Kalibrierbearbeitung, so dass nicht erst nach Beendigung des Räumvorganges die aus den beim Räumen auftretenden Schnittkräfte resultierenden Verformungen des Werkstückes aufgehoben werden, so dass mittels der erfindungsgemäßen Lösung ohne die Berücksichtung von Werkstofftoleranzen die Endmaße wesentlich einfacher und zuverlässiger gefertigt werden können. Gleichzeitig ermöglicht die mittels der erfindungsgemäßen Kalibrierbuchse realisierte beidseitige Schlichtbearbeitung eine Profilkorrektur, beispielsweise eine kundenorientierte Korrektur der Höhenballigkeit, so dass mittels der erfindungsgemäßen Lösung auch jederzeit beispielsweise einer kundenseitig zusätzlich gewünschten Verbesserung der Laufeigenschaften von innenverzahnten Getrieberädem kostengünstig entsprochen werden kann. Gleichzeitig wird mittels der erfindungsgemäßen Lösung die Standzeit der Räumwerkzeuge erhöht und durch eine gleichmäßige Verteilung der Schnittkräfte bewirkt, dass die aus einseitiger Flankenreibung resultierenden Kaltaufschweißungen vermieden werden.

Daher ist das erfindungsgemäße Innenräumwerkzeug zum Räumen von Profilen sehr robust und sehr gut zum Drallräumen geeignet, zudem sehr kostengünstig herstellbar und ermöglicht darüber hinaus ohne Nachbearbeitung des Räumwerkzeuges ein maschinentechnisch einfaches, funktionssicheres und zuverlässiges korrigieren von aus Mittenabweichungen und/oder Torsionsbeanspruchungen resultierenden Räumfehlern, so dass mittels der erfindungsgemäßen Lösung sehr kostengünstig eine hohe Profilform- und Flankengenauigkeit am geräumten Werkstück gewährleistet werden kann

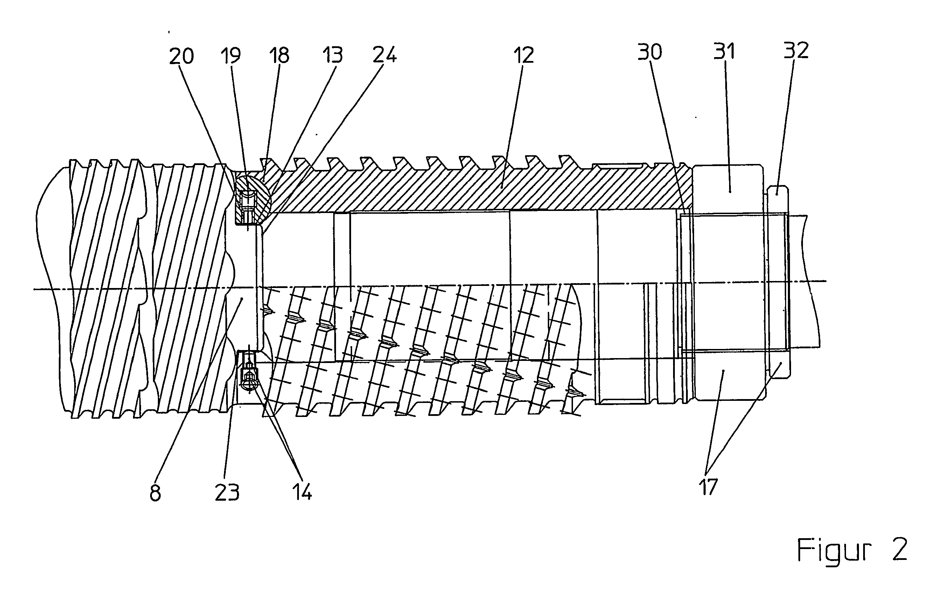

In der Figur 2 ist nun die Einzelheit "Z" des erfindungsgemäßen Innenräumwerkzeuges aus Figur 1, d.h. die "radial verdrehbare" Kalibrierbuchse in einem Teilschnitt dargestellt.

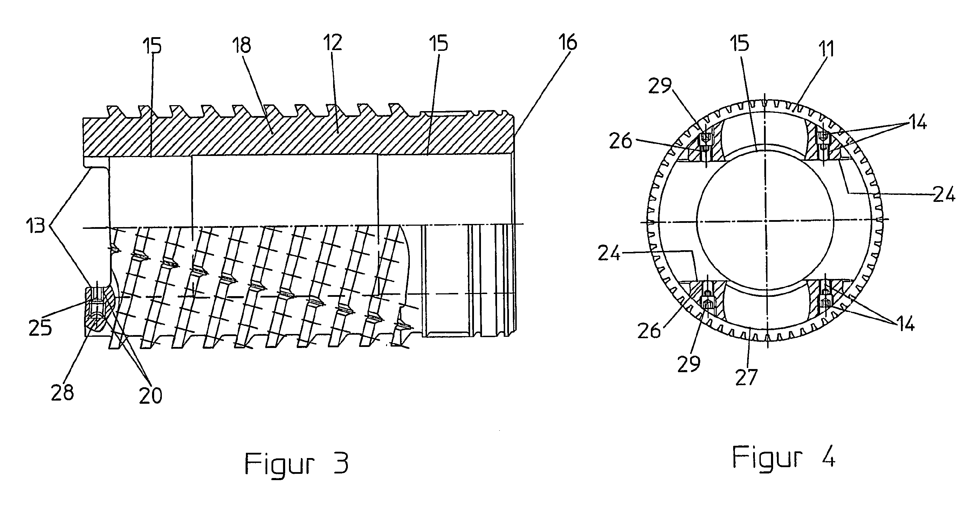

Die Figur 3 zeigt dann diese erfindungsgemäße, in den Figuren 1 und 2 bereits dargestellte "radial verdrehbare" Kalibrierbuchse als Einzelteil in der Seitenansicht im Teilschnitt, und in der Figur 4 ist diese erfindungsgemäße, in der Figur 3 dargestellte "radial verdrehbare" Kalibrierbuchse in der Vorderansicht dargestellt.

Kennzeichnend ist wie in der Figur 2 dargestellt, dass der Buchsenmitnahmebereich 8 als Zweiflach 23 und die Mitnehmeraufnahme 13 der Kalibrierbuchse 12 als eine diesem Zweiflach 23 zugeordnete Mitnahmenut 24 ausgebildet ist, wobei zwischen dem Zweiflach 23 und der Mitnahmenut 24 ein Verdreharbeitsspiel vorgesehen ist, und beidseitig in der Wandung 18 der Kalibrierbuchse 12, lotrecht zur Mittenachse der Mitnahmenut 24 Radialbohrungen 19 mit Gewindebereichen 20 eingebracht sind in denen die Stellelemente 14 angeordnet sind.

Infolge der erfindungsgemäß angeordneten Kalibrierbuchse in Verbindung mit der erfindungsgemäßen, robusten und funktionssicheren Justiermöglichkeit der Kalibrierbuchse können auftretende Räumfehler durch Nachjustieren der Kalibrierbuchse maschinentechnisch einfach, zuverlässig und zudem sehr kostengünstig beseitigt werden.

Die erfindungsgemäße Anordnung ermöglicht eine Korrektur von Räumfehlern, da beispielsweise durch die Änderung der Hauptschnittkraft bzw. eine Änderung der Torsionskräfte (Abstumpfung des Werkzeuges, Änderung der Festigkeitsparameter des Werkstückes, usw.) ein anderer Verlauf der Kalibrierung erforderlich werden kann. Diesem Erfordernis kann nun mittels der erfindungsgemäßen Lösung durch eine Verdrehung der Kalibrierbuchse entweder in positiver oder in negativer Drehrichtung entsprochen werden, wobei die auf das Zweiflach einwirkenden Stellelemente 14 stets sichere Kraftübertragung gewährleisten.

Erfindungswesentlich ist in diesem Zusammenhang auch, dass in den Radialbohrungen 19 zwei einander benachbarte unterschiedliche Gewindebereiche 20 angeordnet sind, wobei in der Wandung 18 der Kalibrierbuchse 12, in dem der Mitnahmenut 24 benachbarten Bereich ein Feingewinde 25 mit einer in diesem Feingewinde 25 angeordneten Stellschraube 26 und zum Außenmantel 27 hin benachbart, ein Normalgewinde 28 mit einer Sicherungsschraube 29 angeordnet ist.

Diese erfindungsgemäße Anordnung ermöglicht, dass während des Räumvorganges auftretende Schwingungen nicht zu einer Lockerung der Stellelemente führen können.

Erfindungsgemäß ist auch, dass im Buchsenbefestigungsbereich 10 am Räumwerkzeuggrundkörper 1, wie in den Figuren 1 und 2 dargestellt, ein Außengewinde 30 angeordnet ist, auf dem entgegen der Räumrichtung als Lagesicherungselement 17 nebeneinander eine Spannmutter 31 und eine Sicherungsmutter 32 angeordnet sind.

Diese erfindungsgemäße Anordnung ermöglicht ein einfaches und sicheres Positionieren der Kalibrierbuchse 12 am Räumwerkzeuggrundkörper 1.

Dabei können selbstverständlich auch andere im Stand der Technik bekannte Lagesicherungselemente Einsatz finden.

Eine zweite mögliche Ausführungsform der erfindungsgemäßen Lösung ist eine axial verschiebbar am Räumwerkzeuggrundkörper angeordnete Kalibrierbuchse.

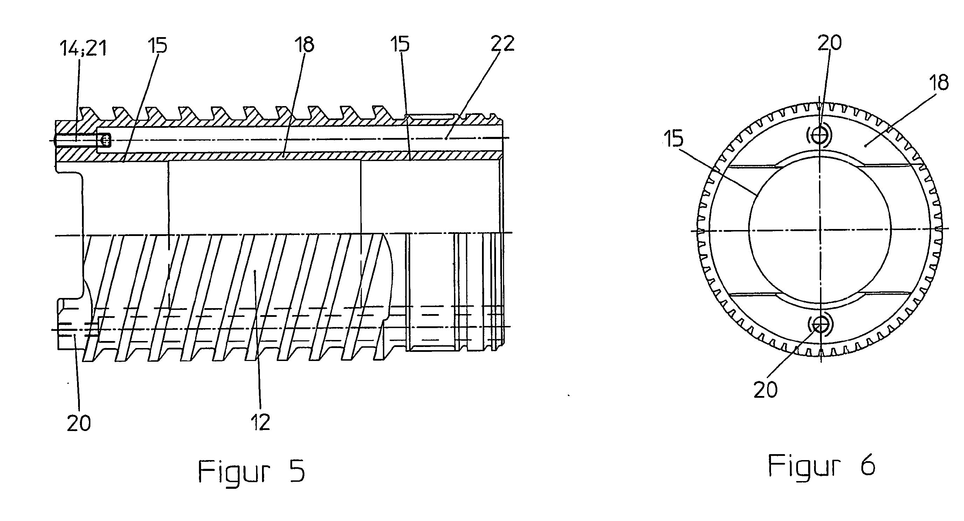

Die Figur 5 zeigt nun eine solche "axial verschiebbare" Kalibrierbuchse als Einzelteil in der Seitenansicht im Teilschnitt.

In der Figur 6 ist die erfindungsgemäße, in der Figur 5 dargestellte "axial verschiebbare" Kalibrierbuchse als Einzelteil in der Vorderansicht dargestellt. Erfindungsgemäß bei dieser Variante der erfindungsgemäßen Lösung ist, dass in der Wandung 18 der Kalibrierbuchse 12 parallel zur Mittenachse der Führungsbohrung 15 über den Umfang gleichmäßig verteilt Axialbohrungen 22 mit Gewindebereichen 20 eingebracht sind, in denen als Stellelemente 14 Axialschrauben 21 angeordnet sind.

Diese erfindungsgemäße Bauform der erfindungsgemäßen Lösung zum Drallräumen ermöglicht eine axiale Verschiebung der Kalibrierbuchse 12, welche auf Grund des Profildrallwinkels eine Verlagerung des Profils bewirkt, so dass mittels der erfindungsgemäßen Anordnung durch Nachjustieren jederzeit eine gleichmäßige Kalibrierung beider Profilflanken erzielt werden kann, speziell dann, wenn das Kalibrierteil mit einem tiefengestaffelten Zahnteil, dass die endgültige Zahnbreite aufweist, ausgeführt ist.

### 23 Bezugszeichenzusammenstellung

- 1: Räumwerkzeuggrundkörper
- 2: Schaft
- 3: Zahnungsteil
- 4: Endstück
- 5: Entspannungsteil
- 6: Buchsenaufnahmebereich
- 7: Buchsenanlagesteg
- 8: Buchsenmitnahmebereich
- 9: Buchsenführungsbereich
- 10: Buchsenbefestigungsbereich
- 11: Kalibrierräumzähne
- 12: Kalibrierbuchse
- 13: Mitnehmeraufnahme
- 14: Stellelement
- 15: Führungsbohrung
- 16: Anlagebund
- 17: Lagesicherungselement
- 18: Wandung
- 19: Radialbohrung
- 20: Gewindebereich
- 21: Axialschraube
- 22: Axialbohrung
- 23: Zweiflach
- 24: Mitnahmenut
- 25: Feingewinde
- 26: Stellschraube
- 27: Außenmantel
- 28: Normalgewinde
- 29: Sicherungsschraube
- 30: Außengewinde
- 31: Spannmutter
- 32: Sicherungsmutter

## Patentansprüche

1. Innenräumwerkzeug zum Innenräumen von Innenverzahnungen mit Profilgrund und Profilflanken bestehend aus einem Räumwerkzeuggrundkörper (1) mit einem Schaft (2), einem dem Schaft (2) entgegen der Räumrichtung benachbart angeordneten Zahnungsteil (3) und einem Endstück (4), wobei am Räumwerkzeuggrundkörper (1), zwischen dem Zahnungsteil (3) und dem Endstück (4) ein dem Zahnungsteil (3) entgegen der Räumrichtung nachfolgend benachbart angeordnetes Entspannungsteil (5) und diesem benachbart ein Buchsenaufnahmebereich (6) mit einem dem Entspannungsteil (5) benachbart angeordneten Buchsenanlagesteg (7), einem Buchsenmitnahmebereich (8), einem entgegen der Räumrichtung diesem benachbart angeordneten Buchsenführungsbereich (9) und einem zwischen dem Buchsenführungsbereich (9) und dem Endstück (4) befindlichen Buchsenbefestigungsbereich (10) angeordnet ist, wobei auf dem Buchsenaufnahmebereich (6) eine mit Kalibrierräumzähnen (11) versehene Kalibrierbuchse (12) angeordnet ist mit einer dem Entspannungsteil (5) benachbart angeordneten, mit dem Buchsenmitnahmebereich (8) in Wirkverbindung tretende Mitnehmeraufnahme (13) sowie mehreren im Bereich der Mitnehmeraufnahme (13) in der Kalibrierbuchse (12) verstellbar angeordneten Stellelementen (14) und einer in der Kalibrierbuchse (12) axial angeordneten, mit dem Buchsenführungsbereich (9) in Wirkverbindung tretenden Führungsbohrung (15), einem an der Kalibrierbuchse (12) endseitig angeordneten, der Mitnehmeraufnahme (13) gegenüberliegen angeordneten Anlagebund (16) sowie einem diesem Anlagebund (16) der Kalibrierbuchse (12) benachbart angeordneten, mit dem Buchsenbefestigungsbereich (10) des Räumwerkzeuggrundkörpers (1) in Wirkverbindung tretenden Lagesicherungselement (17).

2. Innenräumwerkzeug nach Anspruch 1, **dadurch gekennzeichnet, dass** in der Wandung (18) der Kalibrierbuchse (12) parallel zur Mittenachse der Führungsbohrung (15) über den Umfang gleichmäßig verteilt Axialbohrungen (22) mit Gewindebereichen (20) eingebracht sind, in denen als Stellelemente (14) Axialschrauben (21) angeordnet sind.

3. Innenräumwerkzeug nach Anspruch 1, **dadurch gekennzeichnet, dass** im Buchsenbefestigungsbereich (10) am Räumwerkzeuggrundkörper (1) ein Außengewinde (30) angeordnet ist, auf dem entgegen der Räumrichtung als Lagesicherungselement (17) nebeneinander eine Spannmutter (31) und eine Sicherungsmutter (32) angeordnet sind.

4. Innenräumwerkzeug nach Anspruch 1, **dadurch gekennzeichnet, dass** der Buchsenmitnahmebereich (8) als Zweiflach (23) und die Mitnehmeraufnahme (13) der Kalibrierbuchse (12) als eine diesem Zweiflach (23) zugeordnete Mitnahmenut (24) ausgebildet ist, wobei zwischen dem Zweiflach (23) und der Mitnahmenut (24) ein Verdreharbeitsspiel vorgesehen ist, wobei beidseitig in der Wandung (18) der Kalibrierbuchse (12), lotrecht zur Mittenachse der Mitnahmenut (24) Radialbohrungen (19) mit Gewindebereichen (20) eingebracht sind in denen die Stellelemente (14) angeordnet sind.

5. Innenräumwerkzeug nach Anspruch 1, **dadurch gekennzeichnet, dass** die Kalibrierräumzähne (11) entgegen der Räumrichtung größer werdende Zahndicken aufweisen.

6. Innenräumwerkzeug nach Anspruch 1, **dadurch gekennzeichnet, dass** die Kalibrierräumzähne (11) entgegen der Räumrichtung mit der Endmaßzahndicke tiefengestaffelt angeordnet sind, und daher eine Durchmessersteigerung aufweisen.

7. Innenräumwerkzeug nach Anspruch 4, **dadurch gekennzeichnet, dass** in den Radialbohrungen (19) zwei einander benachbarte unterschiedliche Gewindebereiche (20) angeordnet sind, wobei in der Wandung (18) der Kalibrierbuchse (12), in dem der Mitnahmenut (24) benachbarten Bereich ein Feingewinde (25) mit einer in diesem Feingewinde (25) angeordneten Stellschraube (26) und zum Außenmantel (27) hin benachbart, ein Normalgewinde (28) mit einer Sicherungsschraube (29) angeordnet ist.

## Claims

1. Internal broaching tool for the internal broaching of internal gears with profile base and profile flanks consisting of a broaching tool body (1) a gearing part (3) adjoining the shaft (2) opposing the broaching direction and an end piece (4), in which is arranged on the broaching tool body (1) between the gearing part (3) and the end piece (4) a tension relief part (5) adjoining the gearing part (3) opposing the broaching direction, and adjoining this a bush adapter area (6) with a bush contact bar (7) adjoining the tension relief part (5), a bush carrier area (8), an adjoining bush guide area (9) opposing the broaching direction and a bush attachment area (10) between the bush guide area (9) and the end piece (4), with a calibration bush (12) provided with calibration broaching teeth (11) on the bush adapter area (6), with an adjoining tension relief part (5), with the carrier adapter (13) in operative connection with the bush carrier area (8), as well as several setting elements (14) arranged in the area of the carrier adapter (13) in the calibration bush (12), and a guide bore (15) arranged axially in the calibration bush (12) in operative connection with the bush guide area (9), a collar (16) arranged on the end side of the calibration bush (12) opposite the carrier adapter (13), and a position locking element (17) arranged adjoining this collar (16) of the calibration bush (12) in operative connection with the bush attachment area (10) of the broaching tool body (1).

2. Internal broaching tool in accordance with Claim 1, **characterised by** the fact that in the wall (18) of the calibration bush (12) that there are axial bores (22) parallel to the central axis of the guide bore (15) distributed regularly around the circumference, with thread areas (20), in which axial screws (21) are arranged as setting elements (14).

3. Internal broaching tool in accordance with Claim 1, **characterised by** the fact that there is an external thread (30) in the bush attachment area (10) on the broaching tool body (1), on which are arranged a clamping nut (31) and a locking nut (32) next to each other opposing the broaching direction as a position locking element (17).

4. Internal broaching tool in accordance with Claim 1, **characterised by** the fact that the bush carrier area (8) is designed as a dihedron (23) and the carrier adapter (13) of the calibration bush (12) as a carrier groove (24) facing this dihedron (23), whereby torsional play is provided between the dihedron (23) and the carrier groove (24), and radial bores (19) with threaded areas (20), in which setting elements (14) are provided, are arranged in both sides of the wall (18) of the calibration bush (12) perpendicular to the central axis of the carrier groove (24).

5. Internal broaching tool in accordance with Claim 1, **characterised by** the fact that the calibration broaching teeth (11) have tooth thicknesses which become larger against the broaching direction.

6. Internal broaching tool in accordance with Claim 1, **characterised by** the fact that the calibration broaching teeth (11) are staggered in depth against the broaching direction with the final tooth thickness, and therefore increase in diameter.

7. Internal broaching tool in accordance with Claim 4, **characterised by** the fact that in the radial bores (19), there are two adjoining but different threaded areas (20), whereby in the wall (18) of the calibration bush (12), in the area adjoining the carrier groove (24), there is a fine thread (25) with a setting screw (26) arranged in this fine thread (25), and adjoining towards the outer sheath (27), a normal thread (28) with a locking screw (29).

## Revendications

1. Outil de brochage intérieur pour brochage d'engrenages intérieurs avec base de profilé et flancs de profilé composé d'un corps de base d'outil de brochage (1) avec un arbre (2), d'un élément d'engrenage (3) disposé au voisinage de l'arbre (2) dans le sens contraire de la direction de brochage et d'un élément final (4), un élément de détente (5) étant disposé au voisinage de l'élément d'engrenage (3) dans le sens contraire de la direction de brochage, cet élément de détente (5) étant placé sur le corps de base d'outil de brochage (1) entre l'élément d'engrenage (3) et l'élément final (4), une zone de fixation de douille (6) étant disposée au voisinage de l'élément de détente (5), avec une traverse d'appui de douille (7) disposée au voisinage de l'élément de détente (5), avec une zone d'entraînement de douille (8), avec une zone de guidage de douille (9) placée dans son voisinage dans le sens contraire de la direction de brochage et une zone de fixation de douille (10) se trouvant entre la zone de guidage de douille (9) et l'élément final (4), une douille d'étalonnage (12) pourvue d'engrenages de brochage d'étalonnage (11) étant disposée sur la zone de fixation de douille (6), avec une admission d'entraîneur (13) placée au voisinage de l'élément de détente (5) et reliée activement à la zone d'entraînement de douille (8) ainsi qu'avec plusieurs éléments de réglage (14) disposés de manière ajustable dans la zone d'admission d'entraîneur (13) dans la douille d'étalonnage (12) et avec un perçage de guidage (15) placé dans la douille d'étalonnage (12) relié activement à la zone d'entraînement de douille (9) et disposé de manière axiale, avec une collerette de fixation (16) sur la douille d'étalonnage (12) disposée à l'extrémité et placée vis-à-vis de l'admission d'entraîneur (13) ainsi qu'avec un élément de sécurisation de position (17) relié activement à la zone de fixation de douille (10) du corps de base d'outil de brochage (1) et placé au voisinage de cette collerette de fixation (16) et de la douille d'étalonnage (12).

2. Outil de brochage intérieur selon l'exigence 1 **caractérisé par le fait que** des perçages axiaux (22) avec zones de filetage (20) sont disposés dans la paroi (18) de douille d'étalonnage (12) parallèlement à l'axe central du perçage de guidage (15) et ordonnés régulièrement sur le périmètre, des vis axiales (21) y étant placées comme éléments de réglage (14).

3. Outil de brochage intérieur selon l'exigence 1 **caractérisé par le fait qu'**un filetage extérieur (30) est disposé dans la zone de fixation de douille (10) sur le corps de base d'outil de brochage (1), sur lequel filetage sont disposés l'un à côté de l'autre en tant qu'élément de sécurisation de position (17) et dans le sens contraire de la direction de brochage un écrou tendeur (31) et un contre-écrou (32).

4. Outil de brochage intérieur selon l'exigence 1 **caractérisé par le fait que** la zone d'entraînement de douille (8) est conçue comme méplat (23) et que l'admission d'entraîneur (13) de la douille d'étalonnage (12) est conçue comme rainure d'entraînement (24) attribuée à ce méplat (23), un cycle de rotation étant prévu entre le méplat (23) et la rainure d'entraînement (24), des perçages radiaux (19) avec zones de filetage (20) dans lesquels les éléments de réglage (14) sont placés étant disposés des deux côtés dans la paroi (18) de douille d'étalonnage (12), perpendiculairement à l'axe central de rainure d'entraînement (24).

5. Outil de brochage intérieur selon l'exigence 1 **caractérisé par le fait que** les engrenages de brochage d'étalonnage (11) présentent des épaisseurs de dents croissantes dans le sens contraire de la direction de brochage.

6. Outil de brochage intérieur selon l'exigence 1 **caractérisé par le fait que** les engrenages de brochage d'étalonnage (11) sont ordonnés en profondeur quant à l'épaisseur de dent de cale étalon et dans le sens contraire de la direction de brochage et présentent ainsi une augmentation du diamètre.

7. Outil de brochage intérieur selon l'exigence 4 **caractérisé par le fait que** deux zones de filetage (20) différentes et voisines l'une de l'autre sont disposées dans les perçages radiaux (19), un filetage fin (25) étant placé dans la paroi (18) de douille d'étalonnage (12) et au voisinage de la rainure d'entraînement (24) avec une vis de réglage (26) disposée dans ce filetage fin (25) et un filetage normal (28) pourvu d'une vis de sécurisation (29) étant disposé vers le manteau extérieur (27) en son voisinage.
